# EUROPEAN PATENT APPLICATION

(11) **EP 4 250 525 A1**
(43) Date of publication of application: **27.09.2023**
(21) Application number: 22173420.5
(22) Date of filing: 16.05.2022
(51) Int. Cl.: H02J 7/04, G06F 3/048

(54) **CHARGING SYSTEM FOR SMART BATTERY**

(30) Priority: 24.03.2022 TW 111111083
(71) Applicant: Quanta Computer Inc., Taoyuan City 333 (TW)
(72) Inventor: YEN, Wei-Ting, 333 Taoyuan City (TW)
(74) Representative: Michalski Hüttermann & Partner Patentanwälte mbB

(57) **Abstract**

A charging system for a smart battery, including a control device, is provided. The control device includes a processing circuit, configured to receive the charging voltage parameter and the charging current parameter, which were configured by the user, from the bus, and to cause the charging circuit to charge the battery according to the charging voltage parameter and the charging current parameter.

## Description

### CROSS REFERENCE TO RELATED APPLICATIONS

This Application claims priority of Taiwan Patent Application No. 111111083, filed on Mar. 24, 2022, the entirety of which is incorporated by reference herein.

### BACKGROUND OF THE INVENTION

### Field of the Invention

The present disclosure relates to battery charging, in particular it is related to a system for managing battery charging.

### Description of the Related Art

Charging is required for any of the various electronic devices that runs on one or more lithium batteries. Examples of these electronic devices include 3C products, electric vehicles (EVs), energy storage systems (ESSs), and low-altitude satellites. Currently, the charging voltage and the charging current during battery charging are both kept at constant values by default. However, the capacity and endurance of the battery may be affected by the charging voltage. Moreover, and time it takes to charge the battery may be affected by the charging circuit. The lifespan of the battery might also be affected. Therefore, the practical needs of the user may not be met by using constant values of the charging voltage and the charging current that are provided by default.

Therefore, there is a need for a system and method for managing battery charging, enabling users to configure a suitable charging voltage and a suitable charging current, according to their own preference or practical needs.

### BRIEF SUMMARY OF THE INVENTION

An embodiment of the present disclosure provides a system for managing battery charging, including a control device. The control device includes a processing circuit, configured to receive the charging voltage parameter and the charging current parameter, which were configured by the user, from the bus, and to cause the charging circuit to charge the battery according to the charging voltage parameter and the charging current parameter.

In some embodiments, the system further includes a processing device. The processing device provides a user interface for the user to configure the charging voltage parameter and the charging current parameter through the user interface, and transmits the charging voltage parameter and the charging current parameter to the control device via the bus.

In some embodiments, the charging voltage parameter configured by the user has three options: high charging voltage, medium charging voltage, and low charging voltage. The charging current parameter configured by the user has three options: high charging current, medium charging current, and low charging current.

In some embodiments, the processing device further classifies the nine combinations of the three options of the charging voltage parameter and the three options of the charging current parameter into three modes: a quick charging mode, a long lifespan mode, and a high capacity mode. The mode that corresponds to a combination of charging voltage parameter and charging current parameter as configured by the user is displayed on the user interface.

In some embodiments, the quick charging mode includes the combination of the high charging voltage and the high charging current, the combination of the medium charging voltage and the high charging current, and the combination of the low charging voltage and the high charging current. The long lifespan mode includes the combination of the medium charging voltage and the medium charging current, the combination of the medium charging voltage and the low charging current, the combination of the low charging voltage and the medium charging current, and the combination of the low charging voltage and the low charging current. The high capacity mode includes the combination of the high charging voltage and the medium charging current, and the combination of the high charging voltage and the low charging current.

In some embodiments, the control device further includes a register. The first byte of the register is used for storing the charging voltage parameter, and the second byte of the register is used for storing the charging current parameter.

In some embodiments, the processing circuit causes the charging circuit 103 to charge the battery according to the charging voltage parameter and the charging current parameter only under specific conditions. The specific conditions includes: the relative state of charge (RSOC) of the battery is lower than the RSOC threshold, and the ambient temperature of the battery is between the temperature lower bound and the temperature upper bound.

In some embodiments, the specific conditions further include that the number of charge/discharge cycles of the battery is lower than the charge/discharge cycle threshold.

An embodiment of the present disclosure further provides a method for managing battery charging, including the following steps. The control device receives the charging voltage parameter and the charging current parameter that was configured by the user. The control device causes the charging circuit to charge the battery according to the charging voltage parameter and the charging current parameter.

In some embodiments, the method further includes the following steps. A user interface is provided, through which the user can configure the charging voltage parameter and the charging current parameter. The charging voltage parameter and the charging current parameter are transmitted to the control device via the bus.

In some embodiments, the method further includes classifying the nine combinations of the three options of the charging voltage parameter and the three options of the charging current parameter into three modes. This classification is performed by the processing device. The three modes are as follows: a quick charging mode, a long lifespan mode, and a high capacity mode. The particular mode that corresponds to the combination of charging voltage and charging current, as configured by the user, is displayed on the user interface by the processing device.

In some embodiments, the method further includes using a register to store the parameters (for charging voltage and charging current) configured by the user.

The system and method provided by the present disclosure enable users to configure a suitable charging voltage and a charging current according to their own preference or practical needs, and thus the user experience is improved.

### BRIEF DESCRIPTION OF THE DRAWINGS

The present disclosure can be more fully understood by reading the subsequent detailed description and examples with references made to the accompanying drawings. In addition, it should be appreciated that in the flow diagrams of the present disclosure, the order for executing the blocks can be changed, and/or some of the blocks may be changed, deleted, or combined.
FIG. 1 illustrates the system structural diagram of a system for managing battery charging, according to the embodiments of the present disclosure.
FIG. 2 illustrates the flow diagram of a method for the control device to manage the charging voltage during battery charging, according to the embodiments of the present disclosure.
FIG. 3 illustrates the flow diagram of a method for the control device to manage the charging current during battery charging, according to the embodiments of the present disclosure.

### DETAILED DESCRIPTION OF THE INVENTION

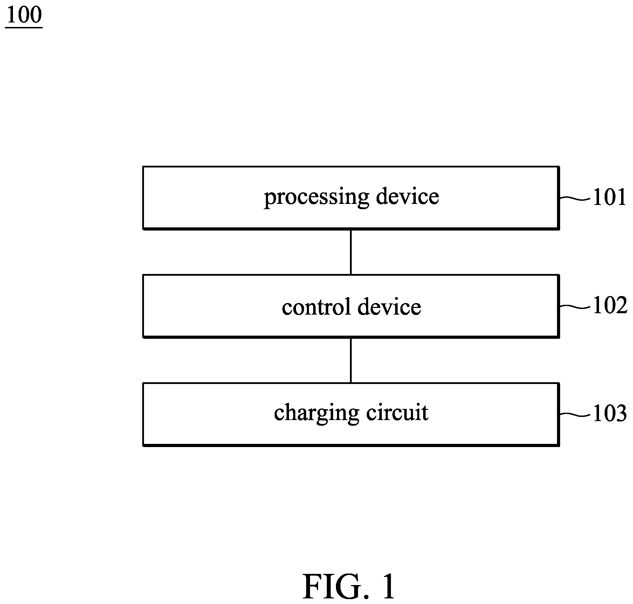

FIG. 1 illustrates the system structural diagram of a system 100 for managing battery charging, according to the embodiments of the present disclosure. As shown in FIG. 1, the system 100 includes a processing device 101, a control device 102, and a charging circuit 103.

The processing device 101 is a device used for loading a program to execute instructions, such as a central processing unit (CPU), a microprocessor, a controller, a microcontroller, or a state machine. The processing device 101 may be coupled to any displaying device, such as an LCD display, an LED display, an OLED display, a plasma display, or a touchscreen element, used for displaying texts and images.

The control device 102 is a device used for managing battery charging, such as a microprocessor, a microcontroller, an embedded processor, or an embedded controller. The control device may be coupled to the processing device 101 and the charging circuit 103 via the bus, such as the system management bus (SMBus) or the inter-integrated circuit (I2C), so as to communicate with the processing device 101 and the charging circuit 103. The control device may further be coupled to the core and the current-sensing resistor (not shown in FIG. 1) of the battery, so as to obtain the voltage and current information of the battery.

The charging circuit 103 is a circuit used for controlling battery charging and the voltage and circuit during charging. The charging circuit 103 may include a metal oxide semiconductor field effect transistor (MOSFET), used as a switch element, and as an element for controlling voltage and current.

According to an embodiment of the present disclosure, the processing device 101 runs a battery management application program, enabling the user to configure the charging voltage parameter and the charging current parameter through the user interface of the battery management application program, and then transmits the charging voltage parameter and the charging current parameter, which were configured by the user, to the control device 102 via the bus. The control device 102 includes a processing circuit, configured to receive the charging voltage parameter and the charging current parameter configured by the user, and to cause the charging circuit 103 to charge the battery according to the charging voltage parameter and the charging current parameter.

In some embodiments, the control device 102 may further include a register. The first byte of the register is used for storing the charging voltage parameter, and the second byte of the register is used for storing the charging current parameter. The first byte can be a high byte. In this case, the second byte is a low byte. Otherwise, the first byte can also be a low byte. In this case, the second byte is a high byte.

In some embodiments, the charging voltage parameter configured by the user has three options: high charging voltage, medium charging voltage, and low charging voltage. For example, the high charging voltage may be 4.35 Volts, the medium charging voltage may be 4.33 Volts, and the low charging voltage may be 4.3 Volts, but the present disclosure is not limited thereto. For another example, the register may store the high charging voltage as "11", the medium charging voltage as "10", and the low charging voltage as "00", but the present disclosure is not limited thereto.

In some embodiments, the charging current parameter configured by the user has three options: high charging current, medium charging current, and low charging current. For example, the high charging circuit may be 1.0 C (C stands for C-rate), the medium charging circuit may be 0.7 C, and the low charging circuit may be 0.5 C, but the present disclosure is not limited thereto. For another example, the register may store the high charging current as "11", the medium charging current as "10", and the low charging current as "00", but the present disclosure is not limited thereto.

The three options of the charging voltage parameter and the three options of the charging current parameter may constitute nine combinations. In some embodiments, the processing device 103 running the battery management application program classifies these nine combinations into three modes: a quick charging mode, a long lifespan mode, and a high capacity mode, according to the characteristics of each of the nine combinations. The user interface of the processing device 103 further displays the mode corresponding to the combination of the charging voltage parameter and the charging current parameter configured by the user, informing the user of the characteristics of the combination of the charging voltage parameter and the charging current parameter that was selected.

In some embodiments, the quick charging mode may include the combination of the high charging voltage and the high charging current, the combination of the medium charging voltage and the high charging current, and the combination of the low charging voltage and the high charging current. The long lifespan mode may include the combination of the medium charging voltage and the medium charging current, the combination of the medium charging voltage and the low charging current, the combination of the low charging voltage and the medium charging current, and the combination of the low charging voltage and the low charging current. The high capacity mode may include the combination of the high charging voltage and the medium charging current, and the combination of the high charging voltage and the low charging current.

In some embodiments, the processing circuit of the control device 102 causes the charging circuit 103 to charge the battery according to the charging voltage parameter and the charging current parameter configured by the user only under specific conditions. Otherwise, the charging circuit 103 will charge the battery using the default value. The specific conditions includes: the relative state of charge (RSOC) of the battery is lower than the RSOC threshold, and the ambient temperature of the battery is between the temperature lower bound and the temperature upper bound. For example, the RSOC threshold may be 50%, but the present disclosure is not limited thereto; the temperature lower bound may be 15°C, and the temperature upper bound may be 45°C, but the present disclosure is not limited thereto.

In a further embodiment, the specific condition further includes: the number of charge/discharge cycles of the battery (i.e., the number of times that the battery is fully charged and then fully discharged) is lower than the charge/discharge cycle threshold. For example, the number of charge/discharge cycles may be 100, but the present disclosure is not limited thereto.

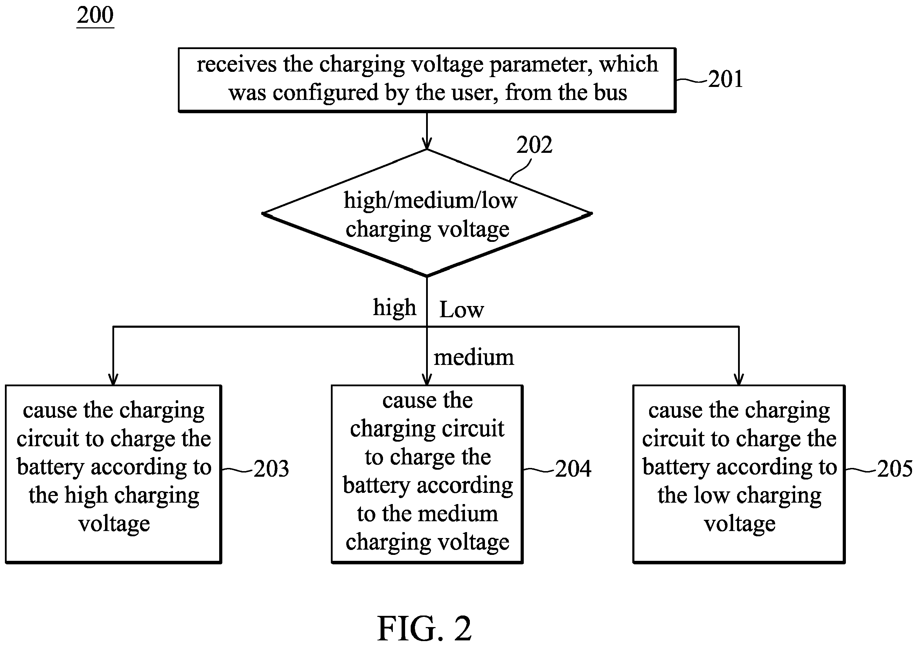

FIG. 2 illustrates the flow diagram of a method 200 for the control device 102 in FIG. 1 to manage the charging voltage during battery charging, according to the embodiments of the present disclosure. As shown in FIG. 2, the method 200 includes the operations 201-204.

The method 200 starts from the operation 201. In the operation 201, the control device 102 receives the charging voltage parameter, which was configured by the user, from the bus. Then, proceed to the operation 202.

In the operation 202, the control device 102 determines the subsequent operations according to the charging voltage parameter received. If the charging voltage parameter is a high charging voltage, proceed to the operation 203. If the charging voltage parameter is a medium charging voltage, proceed to the operation 204. If the charging voltage parameter is a low charging voltage, proceed to the operation 205.

In the operation 203, the control device 102 causes the charging circuit 103 to charge the battery according to the high charging voltage.

In the operation 204, the control device 102 causes the charging circuit 103 to charge the battery according to the medium charging voltage.

In the operation 205, the control device 102 causes the charging circuit 103 to charge the battery according to the low charging voltage.

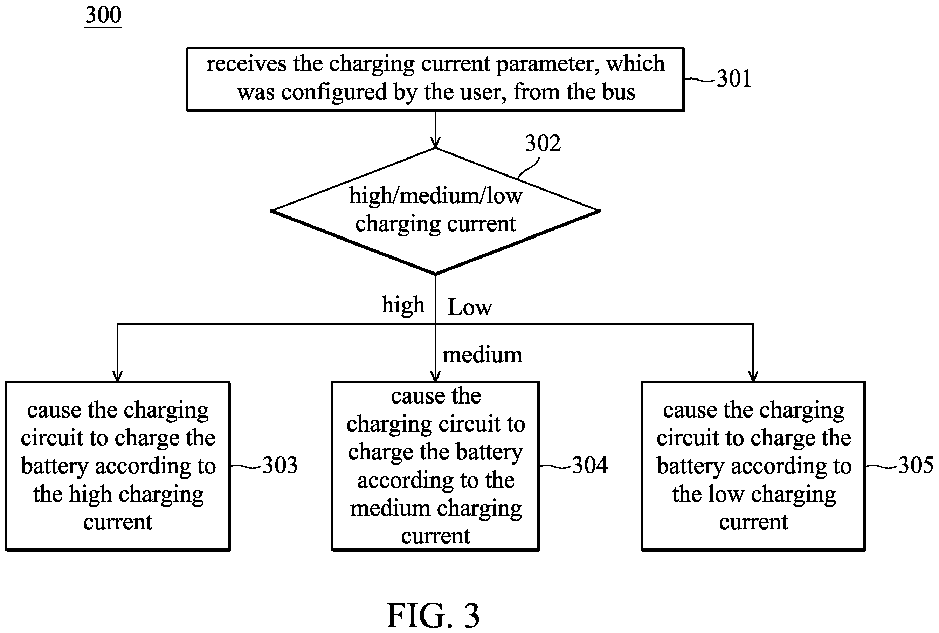

FIG. 3 illustrates the flow diagram of a method 300 for the control device 102 in FIG. 1 to manage the charging current during battery charging, according to the embodiments of the present disclosure. As shown in FIG. 3, the method 300 includes the operations 301-304.

The method 300 starts from the operation 301. In the operation 301, the control device 102 receives the charging current parameter, which was configured by the user, from the bus. Then, proceed to the operation 302.

In the operation 302, the control device 102 determines the subsequent operations according to the charging current parameter received. If the charging current parameter is a high charging current, proceed to the operation 303. If the charging current parameter is a medium charging current, proceed to the operation 304. If the charging current parameter is a low charging current, proceed to the operation 305.

In the operation 303, the control device 102 causes the charging circuit 103 to charge the battery according to the high charging current.

In the operation 304, the control device 102 causes the charging circuit 103 to charge the battery according to the medium charging current.

In the operation 305, the control device 102 causes the charging circuit 103 to charge the battery according to the low charging current.

The battery management application program previously described is loaded by the processing device 101 to execute the first program instruction and the second program instruction. The processing device 101 executes the first program instruction to provide a user interface for the user to configure the charging voltage parameter and the charging current parameter through the user interface. The processing device 101 executes the second program instruction to transmit the charging voltage parameter and the charging current parameter configured by the user to the control device via the bus.

In some embodiments, the charging voltage parameter configured by the user has three options: high charging voltage, medium charging voltage, and low charging voltage. Moreover, the charging current parameter configured by the user has three options: high charging current, medium charging current, and low charging current. The three options of the charging voltage parameter and the three options of the charging current parameter may constitute nine combinations. The battery management application program is loaded by the processing device 101 to further executes the third program instruction and the fourth program instruction. The processing device 101 executes the third program instruction to classify the nine combinations into three modes: a quick charging mode, a long lifespan mode, and a high capacity mode, according to the characteristics of each of the nine combinations. The processing device 101 executes the fourth program instruction so that the user interface will display the mode corresponding to the charging voltage parameter and the charging current parameter configured by the user, informing the user of the characteristics of the combination of the charging voltage parameter and the charging current parameter that was selected.

The system and method provided by the present disclosure enable users to configure a suitable charging voltage and charging current according to their own preference or practical needs, and thus the user experience is improved.

Ordinal terms used in the claims, such as "first," "second," "third," etc., are only for the convenience of explanation, and have no sequential relationship with each other

The above paragraphs are described with multiple aspects. Obviously, the teachings of the specification may be performed in multiple ways. Any specific structure or function disclosed in examples is only a representative situation. According to the teachings of the specification, it should be noted by those skilled in the art that any aspect disclosed may be performed individually, or that more than two aspects could be combined and performed.

While the present disclosure has been described above by way of embodiments, the present disclosure is not limited thereto. The present disclosure may be modified and adjusted by any persons skilled in the art without departing from the spirit and scope of the present disclosure. The scope of protection is subject to the scope of the claims.

## Claims

1. A charging system for a smart battery, comprising:
a control device, comprising a processing circuit, configured to receive a charging voltage parameter and a charging current parameter, which were configured by a user, from a bus, and to cause a charging circuit to charge a battery according to the charging voltage parameter and the charging current parameter.

2. The system as claimed in claim 1, further comprising:
A processing device, providing a user interface for the user to configure the charging voltage parameter and the charging current parameter through the user interface, and transmitting the charging voltage parameter and the charging current parameter to the control device via the bus.

3. The system as claimed in claim 2, wherein the charging voltage parameter configured by the user has three options: high charging voltage, medium charging voltage, and low charging voltage; and
wherein the charging current parameter configured by the user has three options: high charging current, medium charging current, and low charging current.

4. The system as claimed in claim 3, wherein the processing device further classifies nine combinations of the three options of the charging voltage parameter and the three options of the charging current parameter into three modes: a quick charging mode, a long lifespan mode, and a high capacity mode;
and wherein the mode that corresponds to a combination of charging voltage parameter and charging current parameter as configured by the user is displayed on the user interface.

5. The system as claimed in claim 4, wherein the quick charging mode comprises a combination of the high charging voltage and the high charging current, a combination of the medium charging voltage and the high charging current, and a combination of the low charging voltage and the high charging current;
wherein the long lifespan mode comprises a combination of the medium charging voltage and the medium charging current, a combination of the medium charging voltage and the low charging current, a combination of the low charging voltage and the medium charging current, and a combination of the low charging voltage and the low charging current; and
wherein the high capacity mode comprises a combination of the high charging voltage and the medium charging current and a combination of the high charging voltage and the low charging current.

6. The system as claimed in any of claims 1 to 5, wherein the control device further comprises a register, a first byte of the register is used for storing the charging voltage parameter, and a second byte of the register is used for storing the charging current parameter.

7. The system as claimed in any of claims 1 to 6, wherein the processing circuit causes the charging circuit to charge the battery according to the charging voltage parameter and the charging current parameter only under specific conditions; and
wherein the specific conditions comprise: a relative state of charge (RSOC) of the battery being lower than an RSOC threshold, and an ambient temperature of the battery being between a temperature lower bound and a temperature upper bound.

8. The system as claimed in claim 7, wherein the specific conditions further comprise: number of charge/discharge cycles of the battery being lower than a charge/discharge cycle threshold.
